# EUROPEAN PATENT APPLICATION

(11) **EP 4 024 587 A1**
(43) Date of publication of application: **06.07.2022**
(21) Application number: 21218410.5
(22) Date of filing: 30.12.2021
(51) Int. Cl.: H01M 50/213, H01M 50/502, H01M 50/503

(54) **BATTERY PACK**

(30) Priority: 31.12.2020 KR 20200189844
(71) Applicant: Samsung SDI Co., Ltd., Gyeonggi-do 17084 (KR)
(72) Inventor: BAE, Kwangsoo, 17084 Yongin-si (KR); MOON, Deayon, 17084 Yongin-si (KR)
(74) Representative: Shearman, James Ward

(57) **Abstract**

A battery pack includes: a plurality of battery cells arranged in a plurality of rows extending in a row direction, the battery cells being arranged such that rows adjacent to each other in a transverse direction crossing the row direction are alternately shifted to forward and backward positions in the row direction; a busbar extending in the row direction, the busbar including: a busbar body portion extending in the row direction; a busbar front connection portion at one end of the busbar; and a busbar rear connection portion at another end of the busbar, the busbar front connection portion and the busbar rear connection portion protruding from the busbar body portion and having different lengths and levels from each other; and a case accommodating the battery cells, the case including a front wall and a rear wall having complementary shapes and facing each other in the row direction with the battery cells therebetween.

## Description

### BACKGROUND

### 1. Field

Aspects of embodiments relate to a battery pack.

### 2. Description of the Related Art

Generally, secondary batteries are batteries that are designed to be repeatedly charged and discharged, unlike non-rechargeable primary batteries. Secondary batteries may be used as energy sources of, for example, mobile devices, electric vehicles, hybrid electric vehicles, electric bicycles, and uninterruptible power supplies. Single-cell secondary batteries or multi-cell secondary batteries (also referred to as secondary battery packs) in which a plurality of battery cells (e.g., secondary battery cells) are connected together as one unit are used according to the types of external devices that use the secondary batteries.

Unlike small mobile devices, such as cellular phones, capable of operating for a certain period of time using a single battery, large mobile devices, such as laptop computers, or high-power consuming devices, such as electric vehicles or hybrid vehicles, which have long operation times and require high power driving, may require battery packs each including a plurality of batteries (battery cells) to provide sufficient power and capacity. The output voltages or currents of such battery packs may be increased by adjusting the number of batteries included in each battery pack.

### SUMMARY

One or more embodiments include battery packs having the same structure and configured to be connected to each other as one unit to provide modules having various output power levels and capacities. The battery packs having the same structure may be used to satisfy various power and capacity requirements by increasing or decreasing the number of battery packs included in a module, and thus, the battery packs may be used with high expandability or flexibility.

Additional aspects and features will be set forth, in part, in the description which follows and, in part, will be apparent from the description or may be learned by practice of the presented embodiments of the present disclosure.

According to an embodiment, a battery pack includes: a plurality of battery cells arranged in a plurality of rows extending in a row direction, the battery cells being arranged such that rows adjacent to each other in a transverse direction crossing the row direction are alternately shifted to forward and backward positions in the row direction; a busbar extending in the row direction, the busbar including: a busbar body portion extending in the row direction; a busbar front connection portion at one end of the busbar; and a busbar rear connection portion at another end of the busbar, the busbar front connection portion and the busbar rear connection portion protruding from the busbar body portion and having different lengths and levels from each other; and a case accommodating the battery cells. The case includes a front wall and a rear wall having complementary shapes and facing each other in the row direction with the battery cells therebetween.

The front wall may include: a first convex portion protruding forwardly in accordance with a row shifted to a forward position; and a first concave portion concave toward a front side in accordance with a row shifted to a backward position.

The rear wall may include: a second convex portion protruding backwardly in accordance with the row shifted to the backward position; and a second concave portion concave toward a rear side in accordance with the row shifted to the forward position.

The first convex portion of the front wall and the second concave portion of the rear wall may be at the same row positions and may have complementary shapes fittable to each other. The first concave portion of the front wall and the second convex portion of the rear wall may be at the same row positions and may have complementary shapes fittable to each other.

The busbar may be shifted to a forward position or a backward position in the row direction.

The battery pack may further include a plurality of busbars arranged in the transverse direction, and the busbars may be shifted together equally to forward positions or backward positions.

The busbars may be shifted to the forward positions, and the busbar front connection portions of the busbars may protrude a longer distance than the busbar rear connection portions of the busbars.

The busbar front connection portions and the busbar rear connection portions may be stepped from the corresponding busbar body portion and have levels outside walls of the case in a height direction crossing the row direction and the transverse direction.

The busbar front connection portion may extend toward an outside of the front wall at a level outside the front wall, and the busbar rear connection portion may extend toward an outside of the rear wall at a level outside the rear wall.

The busbar front connection portion and the busbar rear connection portion may be at different levels for overlapping each other.

The busbar body portion may extend between the adjacent rows and may electrically connect the battery cells in the adjacent rows to each other.

The busbar front connection portion may be between a first convex portion and a first concave portion of the front wall that are formed corresponding to positions of the adjacent rows, and the busbar rear connection portion maybe between a second convex portion and a second concave portion of the rear wall that are formed corresponding to the positions of the adjacent rows.

The battery pack may further include a connection bar connected to an outermost row in the transverse direction, and the busbar may be between the adjacent rows that are adjacent to each other in the transverse direction.

When the busbar is shifted to the forward position, the connection bar may be shifted to a forward position, or when the busbar is shifted to the backward position, the connection bar may be shifted to a backward position.

The connection bar may include: a connection-bar body portion extending in the row direction and connected to the battery cells in the outermost row; a connection-bar front connection portion at one end of the connection bar; a connection-bar rear connection portion at another end of the connection bar, the connection-bar front connection portion and the connection-bar rear connection portion protruding from the connection-bar body portion in the row direction; and a transverse connection portion protruding from the connection-bar body portion in the transverse direction toward an outside of the battery pack.

The connection-bar front connection portion and the connection-bar rear connection portion may protrude different lengths from the connection-bar body portion in the row direction.

The connection-bar body portion may be inside walls of the case, and the connection-bar front connection portion, the connection-bar rear connection portion, and the transverse connection portion may be stepped from the connection-bar body portion and have levels outside the walls of the case in a height direction crossing the row direction and the transverse direction.

The transverse connection portion may include a plurality of transverse connection portions protruding in the transverse direction from intermittent positions of the connection-bar body portion extending in the row direction.

The battery pack may further include first and second ones of the connection bars respectively connected to different outermost rows.

The transverse connection portion may include: a first transverse connection portion protruding from the first one of the connection bars toward the outside of the battery pack; and a second transverse connection portion protruding from the second one of the connection bars toward the outside of the battery pack.

The first and second transverse connection portions may protrude different lengths respectively from the connection-bar body portions of the first and second ones of the connection bars.

The first and second transverse connection portions may be at different levels for overlapping each other.

The case may further include first and second sidewalls facing each other in the transverse direction. The front wall and the rear wall may face each other in the row direction, and the first and second sidewalls may be flat.

The battery pack may further include a cover on the case. The cover may include: a front edge portion and a rear edge portion facing each other in the row direction; and first and second lateral edge portions facing each other in the transverse direction.

The front edge portion, the rear edge portion, and the first and second lateral edge portions may include concave-convex patterns.

The concave-convex pattern of the front edge portion may include concave portions through which the busbar front connection portion and a connection-bar front connection portion are exposed and a convex portion between the concave portions. The concave-convex pattern of the rear edge portion may include concave portions through which the busbar rear connection portion and a connection-bar rear connection portion are exposed and a convex portion between the concave portions. The concave-convex pattern of the first lateral edge portion may include concave portions through which first transverse connection portions are exposed and a convex portion between the concave portions. The concave-convex pattern of the second lateral edge portion may include concave portions through which second transverse connection portions are exposed and a convex portion between the concave portions.

The concave-convex pattern of the front edge portion may be fitted to the busbar front connection portion and the connection-bar front connection portion, the concave-convex pattern of the rear edge portion may be fitted to the busbar rear connection portion and the connection-bar rear connection portion, the concave-convex pattern of the first lateral edge portion may be fitted to the first transverse connection portions, and the concave-convex pattern of the second lateral edge portion may be fitted to the second transverse connection portions.

At least some of the above and other features of the invention are set out in the claims.

### BRIEF DESCRIPTION OF THE DRAWINGS

The above and other aspects and features of embodiments of the present disclosure will be more apparent from the following description, by way of example only, taken in conjunction with the accompanying drawings, in which:
FIG. 1 is an exploded perspective view of a battery pack according to an embodiment;
FIG. 2 is a perspective view of the battery pack shown in FIG. 1;
FIGS. 3A to 3C are, respectively, a plan view of the battery pack shown in FIG. 1, a plan view illustrating connection between busbars and battery cells which are shown in FIG. 1, and a plan view illustrating connection between a connection bar and battery cells which are shown in FIG. 1;
FIG. 4 is a plan view of an expanded module in which cases, such as a case shown in FIG. 1, are arranged in a row direction and a transverse direction;
FIGS. 5A and 5B are, respectively, a perspective view of a busbar shown in FIG. 1 and a perspective view illustrating an expanded structure in which busbars, such as the busbars shown in FIG. 1, are arranged in the row direction;
FIGS. 6A and 6B are, respectively, a perspective view illustrating connection bars shown in FIG. 1 and a perspective view illustrating an expanded structure in which connection bars, such as the connection bars shown in FIG. 1, are arranged in the transverse direction;
FIG. 7 is a plan view illustrating an expanded module in which battery packs, such as the battery pack shown in FIG. 1, are arranged in the row direction and the transverse direction.
FIG. 8 is an exploded perspective view illustrating a battery pack according to another embodiment;
FIG. 9 is a plan view illustrating the battery pack shown in FIG. 8;
FIG. 10 is a view illustrating an expanded module in which battery packs such, as the battery pack shown in FIG. 9, are arranged in the row direction and the transverse direction; and
FIG. 11 is a perspective view illustrating a portion of a battery pack according to another embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, embodiments are merely described below, by referring to the figures, to explain aspects of the present description. In the figures, dimensions of the various elements, layers, etc. may be exaggerated for clarity of illustration.

As used herein, the term "and/or" includes any and all combinations of one or more of the associated listed items. Expressions, such as "at least one of," when preceding a list of elements, modify the entire list of elements and do not modify the individual elements of the list. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing particular example embodiments of the present disclosure and is not intended to be limiting of the described example embodiments of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Hereinafter, battery packs will be described with reference to the accompanying drawings according to embodiments of the present disclosure.

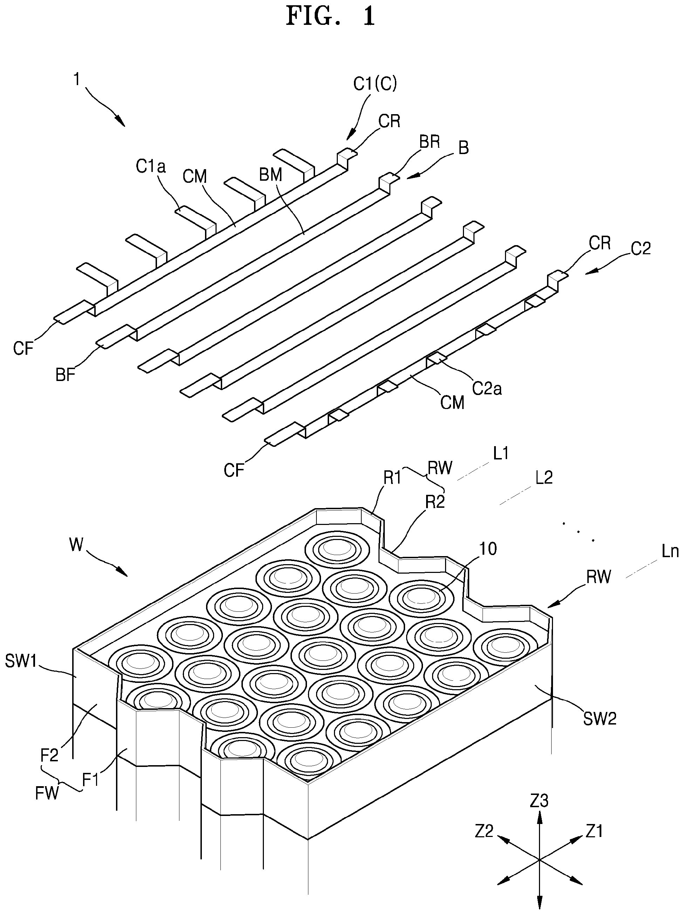

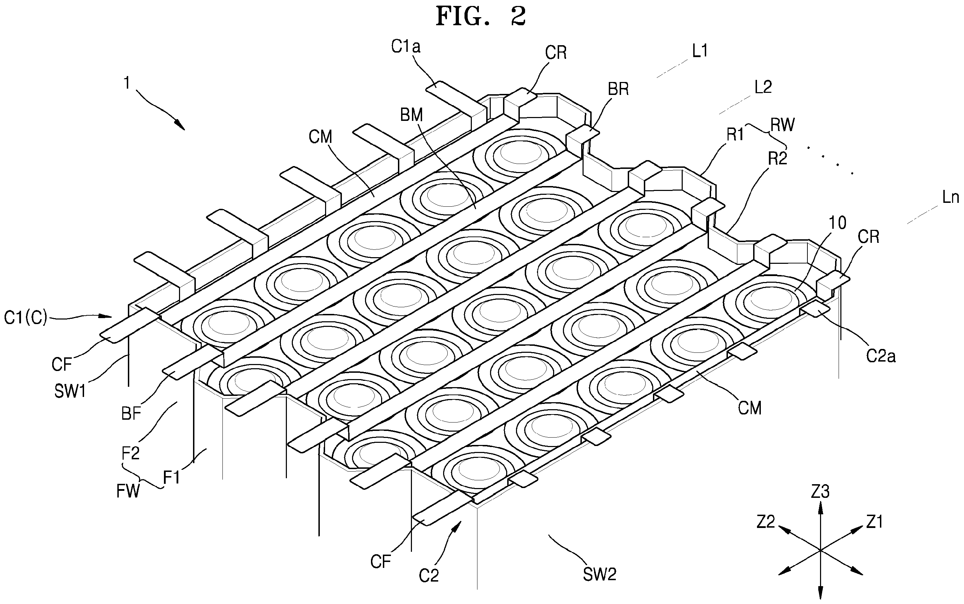

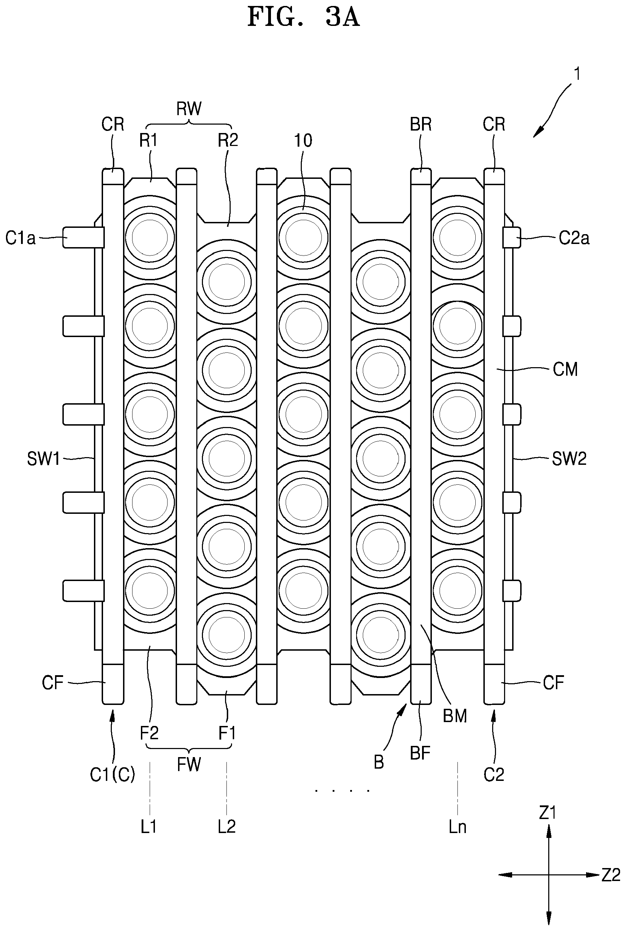

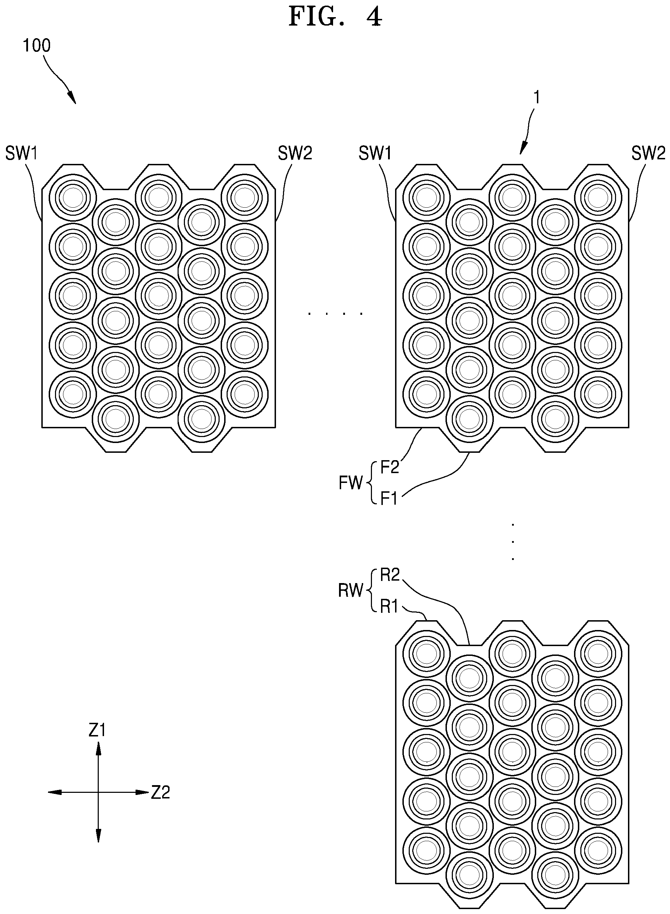

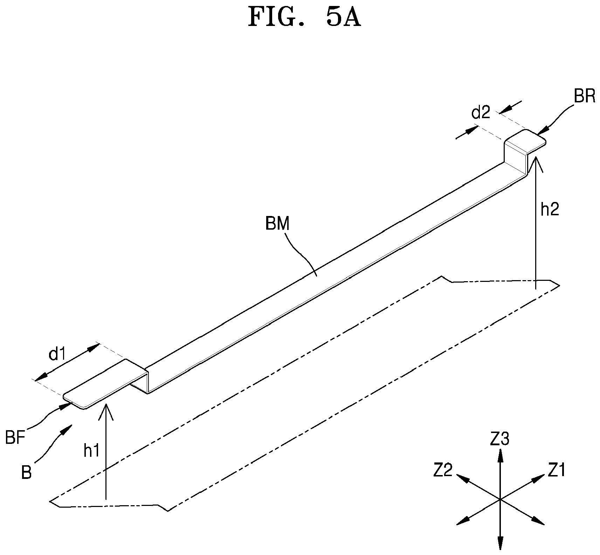

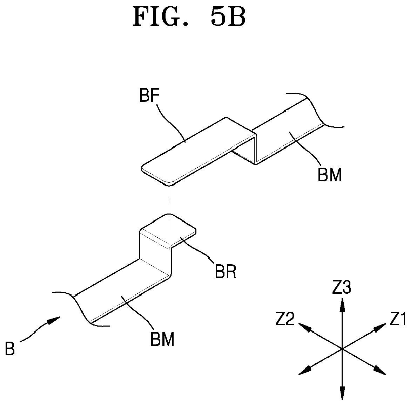

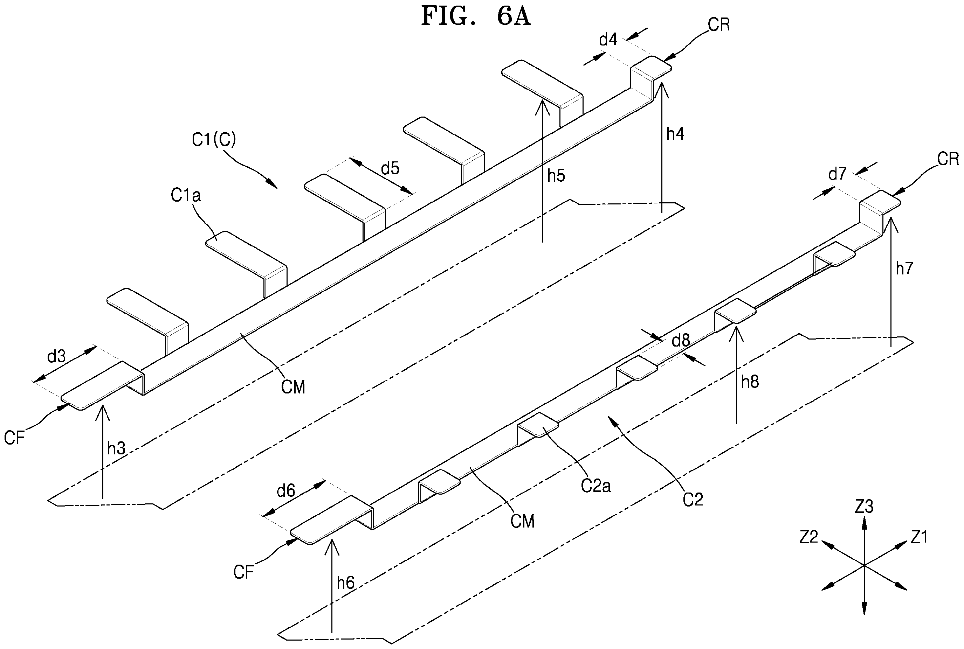

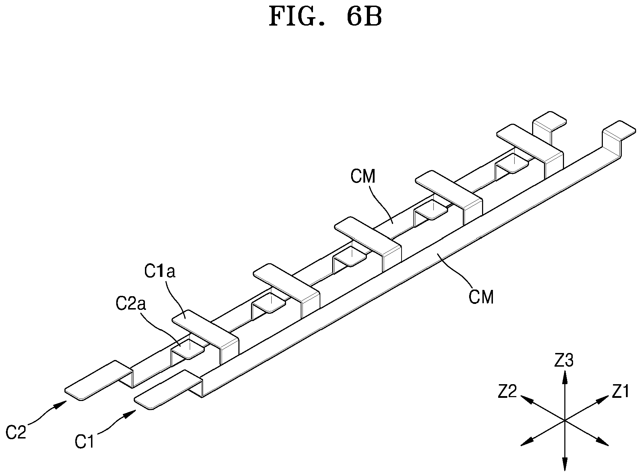

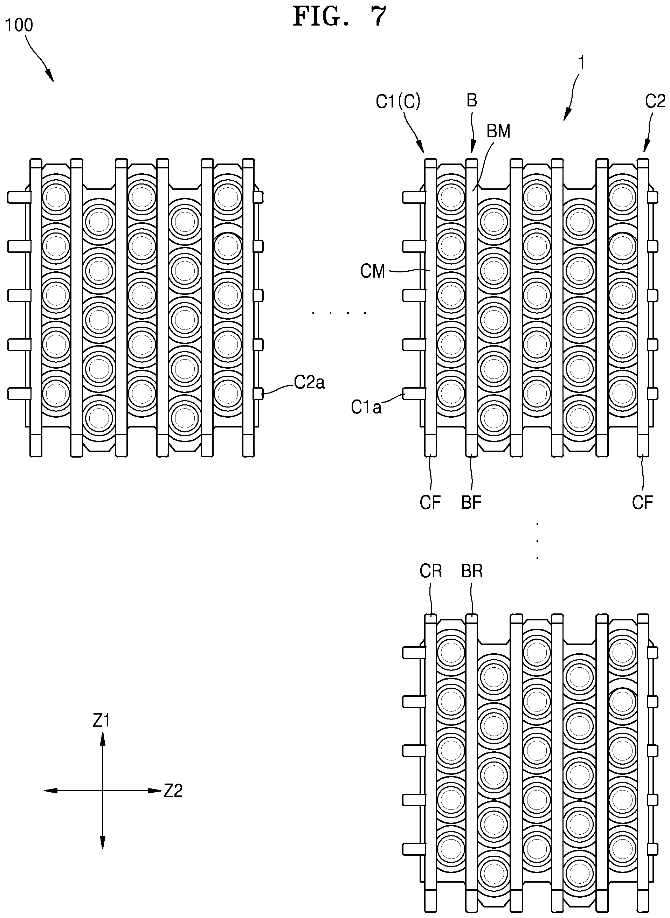

FIG. 1 is an exploded perspective view illustrating a battery pack 1 according to an embodiment. FIG. 2 is a perspective view illustrating the battery pack 1 shown in FIG. 1. FIGS. 3A to 3C are, respectively, a plan view illustrating the battery pack 1 shown in FIG. 1, a plan view illustrating connection between busbars B and battery cells 10 which are shown in FIG. 1, and a plan view illustrating connection between a connection bar C and battery cells 10 which are shown in FIG. 1. FIG. 4 is a plan view illustrating an expanded module in which cases, such as a case W shown in shown in FIG. 1, are arranged in a row direction and a transverse direction. FIGS. 5A and 5B are, respectively, a perspective view illustrating a busbar B shown in FIG. 1 and a perspective view illustrating an expanded structure in which busbars, such as the busbars B shown in FIG. 1, are arranged in the row direction. FIGS. 6A and 6B are, respectively, a perspective view illustrating connection bars C shown in FIG. 1 and a perspective view illustrating an expanded structure in which connection bars, such as the connection bars C shown in FIG. 1, are arranged in the transverse direction. FIG. 7 is a plan view illustrating an expanded module in which battery packs 1, such as the battery pack 1 shown in FIG. 1, are arranged in the row direction and the transverse direction. For the purposes of this specification a busbar may be considered to be a electrically conductive strip or bar.

Referring to FIGS. 1 to 7, according to an embodiment, the battery pack 1 may include: battery cells 10 arranged in a plurality of rows in a row direction Z1 ; busbars B extending in the row direction Z1,; and a case W configured to accommodate the battery cells 10 and including a front wall FW and a rear wall RW which face each other in the row direction Z1 with the battery cells 10 being therebetween and have complementary shapes. Adjacent rows of the battery cells 10, which are adjacent to each other in a transverse direction Z2 crossing the row direction Z1, are alternately shifted to forward positions and backward positions in the row direction Z1. Each of the busbars B includes a body portion BM extending in the row direction Z1, and a front connection portion BF and a rear connection portion BR which protrude from the body portion BM and have different lengths and levels. The front connection portion BF and the rear connection portion BR form both ends (e.g., opposite ends) of the busbar B.

The battery cells 10 may include a plurality of battery cells 10 arranged in the row direction Z1, and in the illustrated embodiment, the plurality of battery cells 10 may be arranged in a plurality of rows which extend in the row direction Z1 and are arranged in (e.g., are adjacent to each other in) the transverse direction Z2. The row direction Z1 refers to the direction in which the battery cells 10 are arranged, and when adjacent rows of the battery cells 10 are alternately shifted to forward and backward positions, the forward and backward positions may be based on the row direction Z1. In an embodiment, the row direction Z1 may refer to a direction in which a plurality of battery cells 10 are arranged in one line, and although it may be considered that a plurality of battery cells 10 are also arranged in the transverse direction Z2, the battery cells 10 arranged in the transverse direction Z2 may be in a zigzag form rather than in one line (e.g., rather than in one straight line). For example, in an embodiment, the battery cells 10 are arranged in rows extending in the row direction Z1. In this arrangement, adjacent rows of battery cells 10 may be alternatively shifted to forward and backward positions, and thus, the battery cells 10 may be arranged in a zigzag form rather than in a straight-line form in the transverse direction Z2 crossing the row direction Z1.

In an embodiment, the expression "adjacent rows are alternately shifted to forward and backward positions in the row direction Z1" may indicate that battery cells 10 in one row are fitted into valleys between battery cells 10 in an adjacent row to provide a dense arrangement of battery cells 10. For example, battery cells 10, which are in first and second rows L1 and L2 adjacent to each other, may be alternately shifted to forward and backward positions in the row direction Z1, such that the battery cells 10 in the first row L1 may be fitted into valleys between the battery cells 10 in the second row L2, which are adjacent to each other in the row direction Z1, and conversely, the battery cells 10 in the second row L2 may be fitted into valleys between the battery cells 10 in the first row L1 which are adjacent to each other in the row direction Z1. In this manner, adjacent rows may be alternatively shifted to forward and backward positions in the row direction Z1, and thus, a greater number of battery cells 10 may be densely arranged in a small area to increase the energy density of the battery pack 1.

In an embodiment, the case W accommodating the battery cells 10 may have a shape corresponding to the arrangement of battery cells 10 which are alternatively shifted in adjacent rows. In an embodiment, the case W accommodating the battery cells 10 may have a wall surrounding (e.g., extending around a periphery of) an accommodation space in which the battery cells 10 are accommodated, and in the illustrated embodiment, the wall of the case W may include a front wall FW and a rear wall RW, which face each other in the row direction Z1, and a first sidewall SW1 and a second sidewall SW2, which face each other in the transverse direction Z2 crossing the row direction Z1. In an embodiment, the front wall FW may include first convex portions F1, each protruding forward according to a row shifted to a forward position, and first concave portions F2, each concave from a front side according to a row shifted to a backward position. The first convex portions F1 and the first concave portions F2 may be alternatively arranged in the transverse direction Z2 according to the arrangement of battery cells 10, which are alternatively shifted to forward and backward positions while being arranged in the transverse direction Z2, and the front wall FW may be formed as the first convex portions F1 and the first concave portions F2 are connected to each other in the transverse direction Z2.

Similar to the front wall FW, the rear wall RW may include second convex portions R1, each protruding backward according to a row shifted to a backward position, and second concave portions R2, each concave from a rear side according to a row shifted to a forward position. The second convex portions R1 and the second concave portions R2 may be alternatively arranged in the transverse direction Z2 according to the arrangement of battery cells 10, which are alternatively shifted to backward and forward positions while being arranged in the transverse direction Z2. The rear wall RW may be formed as the second convex portions R1 and the second concave portions R2 are connected to each other in the transverse direction Z2.

In an embodiment, a row shifted to a forward position may indicate that the front wall FW includes a first convex portion F1 corresponding to the row and the rear wall RW includes a second concave portion R2 corresponding to the row. As described above, in an embodiment, the first convex portions F1 of the front wall FW and the second concave portions R2 of the rear wall RW may be formed in the same rows and may have complementary shapes fittable to each other in the same rows. Similarly, a row shifted to a backward position may indicate that the front wall FW includes a first concave portion F2 corresponding to the row and the rear wall RW includes a second convex portion R1 corresponding to the row. As described above, in an embodiment, the first concave portions F2 of the front wall FW and the second convex portions R1 of the rear wall RW may be formed in the same rows and may having complementary shapes fittable to each other in the same rows.

In an embodiment, the first convex portions F1 of the front wall FW and the second concave portions R2 of the rear wall RW are formed in the same rows and have complementary shapes fittable to each other, and the first concave portions F2 of the front wall FW and the second convex portions R1 of the rear wall RW are formed in the same rows and have complementary shapes fittable to each other, such that modules 100 having various output power levels and capacities may be provided by connecting battery packs 1 having the same structure as one unit. For example, battery packs 1 having the same structure may be used to satisfy various power and capacity requirements by increasing or decreasing the number of battery packs 1 included in a module 100, and thus, the battery packs 1 may be used with high expandability and flexibility.

For example, in an expanded module 100 including a plurality of battery packs 1, adjacent battery packs 1 may be fitted to each other. Here, the expression "adjacent battery packs 1 are fitted to each other" may indicate that the front wall FW of a battery pack 1 and the rear wall RW of another battery pack 1 adjacent to the battery pack 1 are fitted to each other or may indicate that the front wall FW of a battery pack 1 and the rear wall RW of another battery pack 1 adjacent to the battery pack 1 have complementary structures such that the first convex portions F1 and the first concave portions F2 of the front wall FW of the battery pack 1 may be fitted to the second concave portions R2 and the second convex portions R1 of the rear wall RW of the other battery pack 1 adjacent to the battery pack 1. Furthermore, in the expanded module 100 including the battery packs 1 as units having the same structure, the front wall FW and the rear wall RW of each battery pack 1 may have complementary shapes, and the front wall FW and the rear wall RW of each battery pack 1 may include, in a given row, a first convex portion F1 and a second concave portion R2 which have complementary shapes, or a first concave portion F2 and a second convex portion R1 which have complementary shapes, thereby allowing adjacent battery packs 1 to be fitted to each other.

For example, for implementing the expandability of battery packs 1 having the same structure, adjacent battery packs 1 may be arranged in the same orientation, and the rear wall RW of a front battery pack 1 and the front wall FW of a rear battery pack 1 having complementary shapes fittable to each other may be fitted to each other.

Similar to the arrangement of the battery cells 10, the busbars B for electrically connecting the battery cells 10 to each other may be shifted to forward positions or backward positions in the row direction Z1. For example, each of the busbars B may include the body portion BM extending in the row direction Z1, and the front connection portion BF and the rear connection portion BR, which protrude in opposite row directions from the body portion BM and form both ends of the busbar B.

For reference, the front connection portion BF and the rear connection portion BR forming both ends of each of the busbars B may correspond to a busbar front connection portion and a busbar rear connection portion, and a front connection portion CF and a rear connection portion CR forming both ends of each of the connection bars C (described later) may correspond to a connection-bar front connection portion and a connection-bar rear connection portion. In the following description, the terms "front connection portion" and "rear connection portion" will be used for the busbars B as well as for the connection bars C for ease of description, and thus, the terms "front connection portion" and "rear connection portion" may refer to the busbar front connection portion BF and the busbar rear connection portion BR or the connection-bar front connection portion CF and the connection-bar rear connection portion CR according to the technical context. Similarly, the body portion BM of each of the busbars B may correspond to a busbar body portion, and the body portion CM of each of the connection bars C (described later) may correspond to a connection-bar body portion. In the following description, the term "body portion" will be used for the busbars B as well as for the connection bars C for ease of description, and thus, the term "body portion" may refer to the busbar body portion BM or the connection-bar body portion CM according to the technical context.

The expression "the busbars B are shifted to forward positions" may indicate that the front connection portions BF of the busbars B protrude a relatively long distance, and the rear connection portions BR of the busbars B protrude a relatively short distance. Conversely, the expression "the busbars B are shifted to backward positions" may indicate that the front connection portions BF of the busbars B protrude a relatively short distance, and the rear connection portions BR of the busbars B protrude a relatively long distance. In other words, the expression "the busbars B are shifted to forward positions or backward positions" may indicate that the front connection portions BF and the rear connection portions BR of the busbars B protrude different lengths d1 and d2 (see, e.g., FIG. 5A). For example, when the front connection portions BF of the busbars B protrude a relatively long distance, it may be determined that the busbars B are shifted to forward positions, and when the rear connection portions BR of the busbars B protrude a relatively long distance, it may be determined that the busbars B are shifted to backward positions.

As described above, the busbars B may be shifted to forward positions or backward positions. For example, the busbars B adjacent to each other in the transverse direction Z2 may be shifted together equally to forward positions or backward positions (e.g., adjacent busbars B may be aligned with each other) instead of being alternately shifted to forward and backward positions in alternating patterns in the transverse direction Z2 like the arrangement of the battery cells 10. For example, in an embodiment, the busbars B may be equally shifted to forward positions or backward positions and, thus, may not have alternating patterns in the transverse direction Z2. However, in other embodiments, the busbars B may be alternately shifted to forward and backward positions in alternating patterns in the transverse direction Z2 like the arrangement of the battery cells 10. As described later, it is sufficient that each of the busbars B is shifted to a forward or backward position such that the front connection portion BF and the rear connection portion BR, which form both ends of the busbar B, protrude from the body portion BM to have different lengths d1 and d2 (see, e.g., FIG. 5A) and different levels h1 and h2 (see, e.g., FIG. 5A), and in this case, the busbars B may be arranged in the same pattern or alternating patterns in the transverse direction Z2.

In an embodiment, the busbars B may be shifted equally to forward positions or backward positions by considering the ease of manufacture of the battery pack 1 instead of arranging the busbars B in alternating patterns in the transverse direction Z2. In an embodiment, all the busbars B may be shifted equally to forward positions. In such an embodiment, because the busbars B are shifted to forward positions, the front connection portions BF forming front end portions of the busbars B may protrude more than the rear connection portions BR forming rear end portions of the busbars B. In the present specification, the expression "the front connection portions BF or the rear connection portions BR protrude" may indicate that the front connection portions BF or the rear connection portions BR protrude from the body portions BM of the busbars B toward the outside of the battery pack 1. For example, the front connection portions BF may protrude more toward the outside of the battery pack 1 than the rear connection portions BR.

In an embodiment, the busbars B are shifted to forward positions such that the front connection portions BF may protrude more from the body portions BM of the busbars B than the rear connection portions BR, and thus, in the expanded module 100 including the battery packs 1, front connection portions BF protruding a relatively long distance and rear connection portions BR protruding a relatively short distance may overlap each other and form uniform coupling lengths between adjacent battery packs 1. For example, in battery packs 1 adjacent to each other, the rear connection portions BR of a front battery pack 1 and the front connection portions BF of a rear battery pack 1 may be connected to each other in an overlapping manner, and thus, the front battery pack 1 and the rear battery pack 1 may be electrically connected to each other. In such an embodiment, the front connection portions BF protruding a relatively long distance may overlap the rear connection portions BR protruding a relatively short distance overlap each other, and the lengths of the front connection portions BF protruding a relatively long distance may correspond to coupling lengths between the front connection portions BF and the rear connection portions BR. Therefore, when the lengths of the front connection portions BF protruding from the body portions BM of the busbars B are uniformly controlled, the coupling lengths between the front connection portions BF and the rear connection portions BR of the busbars B may be uniformly maintained. Thus, in the expanded module 100 including the battery packs 1, the coupling lengths between adjacent battery packs 1 may be uniformly maintained.

Different from embodiments in which the front connection portions BF or the rear connection portions BR protrude a relatively long distance and the others protrude a relatively short distance, when the front connection portions BF and the rear connection portions BR are designed to protrude the same distance, the front connection portions BF and the rear connection portions BR may physically interfere with each other in the row direction Z1 in a process of connecting the front connection portions BF and the rear connection portions BR to each other in an overlapping manner in adjacent battery packs 1. Thus, the coupling lengths between the front connection portions BF and the rear connection portions BR may not be uniformly controlled as a whole. When the coupling lengths between the front connection portions BF and the rear connection portions BR are not uniform at different positions of the busbars B in the transverse direction Z2, the front connection portions BF and the rear connection portions BR of busbars B having relatively short coupling lengths may not be easily connected to each other compared to the front connection portions BF and the rear connection portions BR of busbars B having relatively long coupling lengths among busbars B arranged at different positions in the transverse direction Z2. Accordingly, adjacent battery packs 1 may not be brought into tight contact with each other but may be separate from (e.g., spaced apart from) each other because of busbars B having relatively long coupling lengths, and the front wall FW and the rear wall RW of adjacent battery packs 1 may not be fitted to each other.

In an embodiment, the front connection portion BF and the rear connection portion BR may be upwardly stepped from the body portion BM of each busbar B and may protrude outwardly from the front wall FW and the rear wall RW, thereby forming shapes which are upwardly stepped and leave (e.g., extend beyond) the front wall FW and the rear wall RW. In such an embodiment, the front connection portion BF and the rear connection portion BR may be formed at different levels h1 and h2 (see, e.g., FIG. 5A) while being stepped from the body portion BM of each busbar B. For example, the front connection portion BF and the rear connection portion BR may be formed at different levels h1 and h2 (see, e.g., FIG. 5A) from the body portion BM in a height direction Z3. In the present specification, the height direction Z3 may refer to a direction crossing (e.g., perpendicular to) the row direction Z1 and the transverse direction Z2.

In the expanded module 100 including the battery packs 1, the front connection portions BF and the rear connection portions BR of the busbars B may be at different levels h1 and h2 (see, e.g., FIG. 5A) in the height direction Z3 to connect together the front connection portions BF and the rear connection portions BR of adjacent battery packs 1 in an overlapping manner. In such an embodiment, from among the front connection portions BF and the rear connection portions BR protruding in a stepped shape from the body portions BM, front or rear connection portions BF or BR, which protrude a relatively long distance, may overlap the others, which protrude a relatively short distance. Thus, for example, even when the front or rear connection portions BF or BR, which protrude a relatively short distance, are placed under the others, which protrude a relatively long distance, in an overlapping manner, the front or rear connection portions BF or BR, which protrude a relatively short distance, may not contact stepped portions of the others, which protrude a relatively long distance, thereby preventing interference therebetween. In such an embodiment, the length of the front or rear connection portions BF or BR, which protrude a relative long distance, may correspond to the coupling length between the front connection portions BF and the rear connection portions BR, and the length of the front or rear connection portions BF or BR, which protrude a relatively long distance from the body portions BM, may be uniformly controlled in a process of manufacturing the busbars B to uniformize the coupling length between the front connection portions BF and the rear connection portions BR at different positions of the busbars B in the transverse direction Z2.

When the front connection portion BF and the rear connection portion BR, which protrude stepwisely from the body portion BM of each busbar B, have the same length, one of the front connection portion BF and the rear connection portion BR, which is placed under the other, may contact the other and interfere with it, and according to the degree of such interference, different coupling lengths, that is, non-uniform coupling lengths, may be formed at different positions of the busbars B in the transverse direction Z2.

In an embodiment, the body portions BM of the busbars B may refer to portions of the busbars B which are inside the case W, that is, which extend in the first direction Z1 between the front wall FW and the rear wall RW. In addition, the front connection portions BF may refer to front end portions of the busbars B that are stepped upwardly from the body portions BM of the busbars B and protrude outwardly away from the front wall FW. Similarly, the rear connection portions BR may refer to rear end portions of the busbars B that are stepped upwardly from the body portions BM of the busbars B and protrude outwardly away from the rear wall RW. As described later, a potting resin may be applied to a portion inside the walls of the case W which accommodates the battery cells 10, and in this case, the walls of the case W may act as a dam for confining the potting resin. The body portions BM of the busbars B arranged inside the walls of the case W may be covered with the potting resin, and the front connection portions BF and the rear connection portions BR, which are at heights higher than the walls of the case W, may be exposed from the potting resin and may be used for connection with other adjacent battery packs 1 without being contaminated with the potting resin.

The front connection portions BF and the rear connection portions BR, which are stepped upwardly from the body portions BM of the busbars B, may be at different levels h1 and h2 (see, e.g., FIG. 5A) in the height direction Z3 from the body portions BM of the busbars B and may protrude in the first direction Z1 by different lengths d1 and d2 (see, e.g., FIG. 5A). Here, the term "upwardly" may refer to a direction defined from the battery cells 10 toward the busbars B according to the positional relationship between the battery cells 10 and the busbars B, and the height direction Z3 may refer to a direction crossing the row direction Z1 and the transverse direction Z2.

In the expanded module 100 including the battery packs 1, the front connection portions BF and the rear connection portions BR of adjacent battery packs 1 are connected to each other in an overlapping manner, and thus, the busbars B of the adjacent battery packs 1 may be connected to each other. In such an embodiment, the front connection portions BF and the rear connection portions BR may be connected to each other in an at least partially overlapping manner without any connection members between the front connection portions BF and the rear connection portions BR. For example, in an embodiment, the front connection portions BF and the rear connection portions BR may be connected to each other by a laser welding method in a state in which the front connection portions BF and the rear connection portions BR overlap each other, and in this case, connection portions formed by welding or fastening members, such as simple bolts used for fastening, may not be connection members (e.g., may be omitted). The term "connection members" may refer to members which provide additional conductive paths for connecting the front connection portions BF and the rear connection portions BR of adjacent battery packs 1 to each other when the front connection portions BF and the rear connection portions BR are not sufficiently close to each other or do not have sufficient overlapping lengths. For example, the term "connection members" may refer to connection members that have end portions connected to the front connection portions BF, other end portions connected to the rear connection portions BR, and portions extending between the end portions for connecting together the front connection portions BF and the rear connection portions BR that are adjacent to each other.

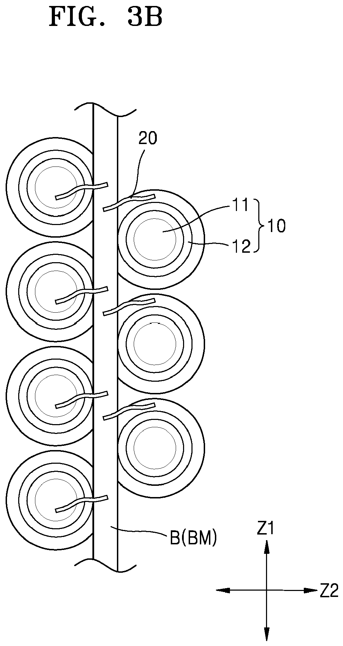

The busbars B (e.g., the body portions BM of the busbars B) may be arranged between adjacent rows to electrically connect the adjacent rows to each other. For example, in an embodiment, the busbars B (e.g., the body portions BM of the busbars B) may connect battery cells 10 in the same row in parallel to each other and may connect battery cells 10 in adjacent rows in series to each other. For example, contact members 20 (see, e.g., FIG. 3B) may be arranged between the busbars B and electrodes 11 and 12 (see, e.g., FIG. 3B) of the battery cells 10, and the contact members 20 may connect battery cells 10 in the same row in parallel to each other by connecting electrodes of the same polarity (the electrodes 11 or 12) to the same busbar B and may connect battery cells 10 in adjacent rows in series to each other by connecting electrodes of different polarities (the other of the electrodes 11 or 12) to the same busbar B. In an embodiment, the contact members 20 may be (or may include) conductive wires or conductive ribbons. In an embodiment, the potting resin may cover the contact members 20 and the busbars B (e.g., the body portions of the busbars B) to protect joint portions between the contact members 20 and the busbars B. In an embodiment, the potting resin may be applied inside the walls the case W accommodating the battery cells 10, and the potting resin may be filled in the case W functioning as a dam up to a height equal or less than the height of the walls of the case W.

The body portions BM of the busbars B may provide electrical connection between the battery cells 10 accommodated in the case W, and the front connection portions BF and the rear connection portions BR, which protrude from the body portions BM of the busbars B and form ends of the busbars B, may provide electrical connection between adjacent battery packs 1 in the expanded module 100 including the battery packs 1.

In an embodiment, for the expandability of the battery pack 1, the front wall FW and the rear wall RW of the battery pack 1 may formed in shapes complementary to each other, and the front connection portions BF and the rear connection portions BR of the busbars B provided in the battery pack 1 may protrude from the body portions BM and have different lengths d1 and d2 (see, e.g., FIG. 5A) and different levels h1 and h2 (see, e.g., FIG. 5A). In embodiments of the present specification, the front connection portions BF and the rear connection portions BR protrude from the body portions BM to have different lengths d1 and d2 and different levels h1 and h2, and these shapes may be expressed that the front connection portions BF and the rear connection portions BR are formed in shapes complementary to each other or in complementary shapes. For example, the expression "the front connection portions BF and the rear connection portions BR are formed in shapes complementary to each other" may indicate that the front connection portions BF and the rear connection portions BR are arranged at different levels h1 and h2 in the height direction Z3 such that the front connection portions BF and the rear connection portions BR may overlap with each other, and the front connection portions BF or the rear connection portions BR may protrude a relatively long distance and the others may protrude a relatively short distance such that the front connection portions BF and the rear connection portions BR may form a uniform coupling length.

The front connection portions BF and the rear connection portions BR may form both ends of the busbars B extending between adjacent rows and may be arranged between the convex portions F1 and R1 and the concave portions F2 and R2 corresponding to the positions of the rows. For example, the front connection portions BF and the rear connection portions BR may be arranged between the convex portions F1 and R1 and the concave portions F2 and R2, and in such an embodiment, the expression "the front connection portions BF and the rear connection portions BR are arranged between the convex portions F1 and R1 and the concave portions F2 and R2" may indicate that the front connection portions BF and the rear connection portions BR are arranged between center positions of the convex portions F1 and R1 and center positions of the concave portions F2 and R2. Here, the center positions of the convex portions F1 and R1 and the concave portions F2 and R2 may refer to apex positions at which the convex portions F1 and R1 and the concave portions F2 and R2 are curved or center positions between the convex portions F1 and R1 and the concave portions F2 and R2 in the transverse direction Z2 in which the convex portions F1 and R1 and the concave portions F2 and R2 are alternately arranged. For example, the front connection portions BF may extend from the body portions BM extending between adjacent rows and may be arranged between the first convex portions F1 and the first concave portions F2 of the front wall FW which correspond to the positions of the adjacent rows. Similarly, the rear connection portions BR may extend from the body portions BM extending between adjacent rows and may be arranged between the second convex portions R1 and the second concave portions R2 of the rear wall RW which correspond to the positions of the adjacent rows.

In the expanded module 100 including battery packs 1, the first convex portions F1 and the second concave portions R2 formed on the front walls FW and the rear walls RW may be fitted to each other, and the first concave portions F2 and the second convex portions R1 formed on the front walls FW and the rear walls RW may be fitted to each other. In such an embodiment, the front connection portions BF and/or the rear connection portions BR may extend between the first convex portions F1 and the first concave portions F2 of the front walls FW and between the second concave portions R2 and the second convex portions R1 of the rear walls RW, thereby electrically connecting the adjacent battery packs 1.

In an embodiment, the busbars B may extend between rows which are adjacent in the transverse direction Z2 to electrically connect the battery cells 10 that are in adjacent rows to each other. In an embodiment, the outermost rows L1 and Ln (e.g., a first row L1 and an nth row Ln) in the transverse direction Z2 may be connected to the outside of the battery pack 1 through the connection bars C. For example, in an embodiment, a first connection bar C1 may be connected to the first row L1, which is located at an end position in the transverse direction Z2, and a second connection bar C2 may be connected to the nth row Ln (e.g., a last low), which is located at the other end position in the transverse direction Z2.

The connection bars C may include body portions CM extending in the row direction Z1 and connected to the battery cells 10 in the outermost rows L1 and Ln, front connection portions CF and rear connection portions CR protruding from the body portions CM in the row direction Z1 to form ends (e.g., opposite ends) of the connection bars C, and transverse connection portions C1a and C2a protruding from the body portions CM toward the outside of the battery pack 1 parallel with the transverse direction Z2. In an embodiment, the transverse connection portions C1a and C2a may include a first transverse connection portion C1a protruding from the first connection bar C1 toward the outside of the battery pack 1 and a second transverse connection portion C2a protruding from the second connection bar C2 toward the outside of the battery pack 1.

The transverse connection portions C1a and C2a may include a plurality of first transverse connection portions C1a and a plurality of second transverse connection portions C2a which protrude from the body portions CM of the connection bars C in the transverse direction Z2 and are arranged at a plurality of positions in the row direction Z1. For example, the transverse connection portions C1a and C2a may protrude in the transverse direction Z2 at intermittent positions from the body portions CM, which extend in the row direction Z1, and the transverse connection portions C1a and C2a formed at a plurality of positions in the row direction Z1 may be electrically connected to the transverse connection portions C1a and C2a of adjacent battery packs 1. For example, the number of first transverse connection portions C1a and the number of second transverse connection portions C2a may be the same in the row direction Z1, and in the expanded module 100 including the battery packs 1, the first and second transverse connection portions C1a and C2a of adjacent battery packs 1 may be connected to each other in a one-to-one manner to electrically connect the adjacent battery packs 1 to each other.

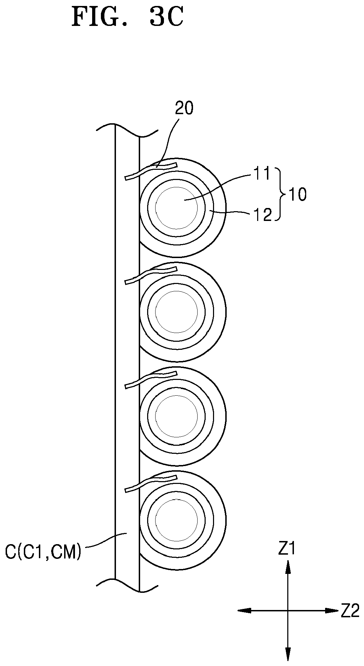

The body portions CM of the connection bars C may be arranged inside the walls of the case W of the battery pack 1, and the front connection portions CF, the rear connection portions CR, and the first and second transverse connection portions C1a and C2a may be stepped upwardly from the body portions CM and may form levels h3 to h8 (see, e.g., FIG. 6A) outside the walls of the case W. The front connection portions CF and the rear connection portions CR, which are for the expandability of the battery pack 1 in the row direction Z1, and the first and second transverse connection portions C1a and C2a, which are for the expandability of the battery pack 1 in the transverse direction Z2, may be used such that battery packs 1 adjacent to each other in the row direction Z1 or the transverse direction Z2 may be electrically connected to each other through the front connection portions CF, the rear connection portions CR, the first and second transverse connection portions C1a and C2a at the levels h3 to h8 (see, e.g., FIG. 6A) outside the walls of the cases W of the adjacent battery packs 1. In addition, the front connection portions CF, the rear connection portions CR, and the first and second transverse connection portions C1a and C2a may be provided at the levels h3 to h8 outside the walls of the case W, which may act as a dam containing the potting resin so as not to be contaminated by the potting resin applied inside the walls of the case W in which the battery cells 10 are accommodated. For example, the front connection portions CF, the rear connection portions CR, and the first and second transverse connection portions C1a and C2a may be stepped upwardly from the body portions CM of the connection bars C and may form the levels h3 to h8 (see, e.g., FIG. 6A). In such an embodiment, the body portions CM of the connection bars C may be embedded in the potting resin together with contact members 20 (see, e.g., FIG. 3C) connected to the body portions CM.

Similar to the busbars B, the connection bars C may be shifted to forward positions or backward positions, and in an embodiment, the connection bars C may be shifted to forward positions similar to the busbars B. Therefore, the connection bars C may include the front connection portions CF that protrude a relatively long distance and the rear connection portions CR that protrude a relatively short distance. For example, the front connection portions CF and the rear connection portions CR may protrude to have different lengths d3, d4, d6, and d7 (see, e.g., FIG. 6A) and the levels h3, h4, h6, and h7 and may have shapes complementary to each other. The complementary shapes of the front connection portions CF and the rear connection portions CR may implement the expandability of the battery pack 1 in the row direction Z1.

In an embodiment, the connection bars C may include the first and second connection bars C1 and C2. The front connection portion CF and the rear connection portion CR of the first connection bar C1 may protrude to have different lengths d3 and d4 and different levels h3 and h4, and the front connection portion CF and the rear connection portion CR of the second connection bar C2 may protrude to have different lengths d6 and d7 and different levels h6 and h7. For example, in the expanded module 100 including the battery packs 1, the front connection portions CF and the rear connection portions CR of the first connection bars C1 may be connected to each other in an overlapping manner between the battery packs 1 that are adjacent to each other in the row direction Z1, and the front connection portions CF and the rear connection portions CR of the second connection bars C2 may be connected to each other in an overlapping manner between the battery packs 1 adjacent to each other in the row direction Z1. Therefore, the front connection portions CF and the rear connection portions CR of the first connection bars C1 may protrude to have different lengths d3 and d4 and different levels h3 and h4, and the front connection portions CF and the rear connection portions CR of the second connection bars C2 may protrude to have different lengths d6 and d7 and different levels h6 and h7. In an embodiment, the front connection portions CF of the connection bars C and the front connection portions BF of the busbars B, which are formed on the front side, may protrude to have identical (or substantially identical) lengths d1, d3, and d6 (see, e.g., FIGS. 5A and 6A) and identical (or substantially identical) levels h1, h3, and h6 (see, e.g., 5A and 6A), and the rear connection portions CR of the connection bars C and the rear connection portions BR of the busbars B, which are formed on the rear side, may protrude to have identical (or substantially identical) lengths d2, d4, and d7 (see, e.g., FIGS. 5A and 6A) and identical (or substantially identical) levels h2, h4, and h7.

The front connection portions CF and the rear connection portions CR may implement the expandability of the battery pack 1 in the row direction Z1, and the first and second transverse connection portions C1a and C2a may implement the expandability of the battery pack 1 in the transverse direction Z2. For example, the first and second transverse connection portions C1a and C2a may protrude from the body portions CM of the connection bars C to have different lengths d5 and d8 (see, e.g., FIG. 6A) and different levels h5 and h8. In an embodiment, the first and second transverse connection portions C1a and C2a may protrude from the body portions CM of the first and second connection bars C1 and C2 to have different lengths d5 and d8 and different levels h5 and h8.

In an expanded module 100 including a plurality of battery packs 1 arranged in the transverse direction Z2, the first and second transverse connection portions C1a and C2a between the battery packs 1 adjacent to each other in the transverse direction Z2 may be connected to each other in an overlapping manner, and to this end, the number of the first transverse connection portions C1a and the number of the second transverse connection portions C2a may be the same in the row direction Z1, but the first and second transverse connection portions C1a and C2a may have different levels h5 and h8 (see, e.g., FIG. 6A) in the height direction Z3. In addition, the first and second transverse connection portions C1a and C2a may protrude to have different lengths d5 and d8 such that when the first and second transverse connection portions C1a and C2a of adjacent battery packs 1 overlap each other, the first and second transverse connection portions C1a and C2a may not interfere with each other in the transverse direction Z2 and may not form non-uniform coupling lengths caused by interference therebetween.

When the first transverse connection portions C1a or the second transverse connection portions C2a, which protrude a relatively long distance, are arranged to overlap the others of the first transverse connection portions C1a or the second transverse connection portions C2a, which protrude a relatively short distance, the coupling length therebetween may correspond to the length of the first transverse connection portions C1a or the second transverse connection portions C2a, which protrude a relatively long distance. Thus, when the first transverse connection portions C1a or the second transverse connection portions C2a, which protrude a relatively long distance, have uniform lengths, uniform coupling lengths may be formed in the first direction Z1 between the first and second transverse connection portions C1a and C2a. However, when the first and second transverse connection portions C1a and C2a protrude to have equal or equivalent lengths, the first transverse connection portions C1a or the second transverse connection portions C2a, which overlap the others from the lower sides of the others, may interfere with stepped portions of the others. In this case, the first and second transverse connection portions C1a and C2a may have relatively large coupling lengths and relatively small coupling lengths depending on the positions of the first and second transverse connection portions C1a and C2a, and it may be difficult to connect together the first and second transverse connection portions C1a and C2a having relatively small coupling lengths and adjacent battery packs 1 may not be brought into tight contact with other but may be separated from each other due to the first and second transverse connection portions C1a and C2a having relatively large coupling lengths.

In embodiments of the present specification, the first and second transverse connection portions C1a and C2a protruding from the body portions CM to have different lengths d5 and d8 (see, e.g., FIG. 6A) and different levels h5 and h8 may be expressed that the first and second transverse connection portions C1a and C2a are formed in shapes complementary to each other. For example, the expression "the first and second transverse connection portions C1a and C2a are formed in shapes complementary to each other" may indicate that the first and second transverse connection portions C1a and C2a are formed at different levels h5 and h8 in the height direction Z3 such that the first and second transverse connection portions C1a and C2a may overlap each other and that the first transverse connection portions C1a or the second transverse connection portions C2a protrude a relatively long distance while- the others protrude a relatively short distance such that the first and second transverse connection portions C1a and C2a may form uniform coupling lengths. In addition, the expression "the first and second transverse connection portions C1a and C2a are formed in shapes complementary to each other" may refer to a structure for connecting the first and second transverse connection portions C1a and C2a to each other. For example, in an embodiment, the expression may indicate that the number of first transverse connection portions C1a and the number of second transverse connection portions C2a are equal in the first direction Z1 for one-to-one connection therebetween.

The connection bars C may include the front connection portions CF and the rear connection portions CR, which have complementary shapes to implement the expandability of the battery pack 1 in the row direction Z1, and the first transverse connection portions C1a and the second transverse connection portions C2a, which have complementary shapes to implement the expandability of the battery pack 1 in the transverse direction Z2 crossing the row direction Z1. For example, in the expanded module 100 including the battery packs 1, battery packs 1 adjacent to each other in the transverse direction Z2 may be electrically connected to each other through the first and second transverse connection portions C1a and C2a having complementary shapes. In such an embodiment, the expression "the first and second transverse connection portions C1a and C2a have complementary shapes" may indicate that the first transverse connection portions C1a and/or the second transverse connection portions C2a protrude a relatively long distance and the others protrude a relatively short distance such that the first and second transverse connection portions C1a and C2a having complementary shapes may be connected to each other without additional connection members therebetween. In some embodiments, the first and second transverse connection portions C1a and C2a may protrude to the outside of the battery pack 1 from the body portions CM of the first and second connection bars C1 and C2 to have different lengths d5 and d8 in the transverse direction Z2. For example, the first and second transverse connection portions C1a and C2a may protrude a relatively long distance or a relatively short distance from the body portions CM of the first and second connection bars C1 and C2 to the outside of the first sidewall SW1 or the second sidewall SW2.

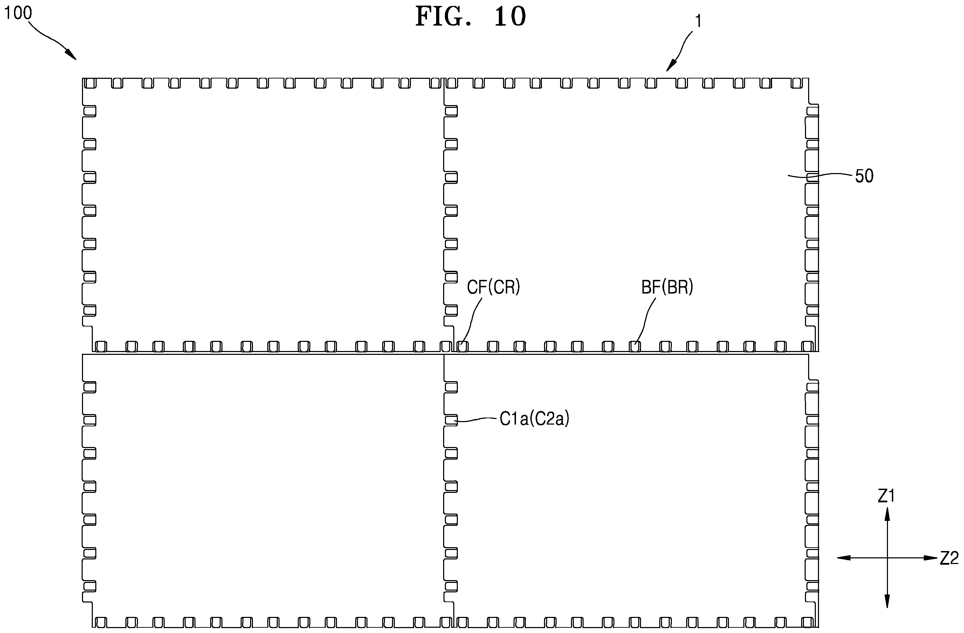

In an embodiment, the battery pack 1 may have expandability in two different directions, that is, in the row direction Z1 and the transverse direction Z2. For example, the battery pack 1 may be configured such that a plurality of battery packs 1 may be coupled to each other in the row direction Z1 to provide an expanded module 100 including the plurality of battery packs 1 in the row direction Z1 and a plurality of battery packs 1 may also be coupled to each other in the transverse direction Z2 to provide an expanded module 100 including the plurality of battery packs 1 in the transverse direction Z2. In such an embodiment, the expression "the present disclosure provides expandability in different directions, that is, in the row direction Z1 and the transverse direction Z2" may indicate that the present disclosure provides two-dimensional expandability in the first direction Z1 and the transverse direction Z2 rather than providing one-dimensional expandability in row direction Z1 or the transverse direction Z2. For example, in an embodiment, the battery packs 1 may have two-dimensional expandability in the row direction Z1 and the transverse direction Z2, and in an embodiment as shown in FIG. 10, a module 100 expanded both in the first direction Z1 and the transverse direction Z2 may include two battery packs 1 in the row direction Z1 and also two battery packs 1 in the transverse direction Z2 totaling four battery packs 1 arranged in the first direction Z1 and the transverse direction Z2.

For the extensibility in the row direction Z1, the front wall FW and the rear wall RW of the case W in the row direction Z1 may include the first and second convex portions F1 and R1 and the first and second concave portions F2 and R2, which are complementary to each other, such that the first and second convex portions F1 and R1 and the first and second concave portions F2 and R2 of battery packs 1 adjacent to each other in the row direction Z1 may be fitted to each other. In addition, because the busbars B shifted to forward positions or backward positions in the row direction Z1 include the front connection portions BF and the rear connection portions BR, which form ends of the busbars B and are complementary to each other, the front connection portions BF and the rear connection portions BR adjacent to each other in the row direction Z1 may be connected to each other. Here, the expression "the front connection portions BF and the rear connection portions BR for adjacent battery cells 10 are formed in complementary shapes" may indicate that front connection portions BF and rear connection portions BR arranged at the same position in the transverse direction Z2 are formed in complementary shapes.

For the extensibility in the transverse direction Z2, the first and second sidewalls SW1 and SW2 of the case W in the transverse direction Z2 may be formed in a flat shape, such that the first and second sidewalls SW1 and SW2 of adjacent battery packs 1 may be brought into surface contact with each other, and thus, it may be possible to provide an expanded module 100 including battery packs 1 that are adjacent to each other in the transverse direction Z2 in a state in which flat surfaces of the first and second sidewalls SW1 and SW2 of the battery packs 1 contact each other without a gap therebetween. In addition, because the first and second transverse connection portions C1a and C2a protruding in the transverse direction Z2 are formed in complementary shapes, the first and second transverse connection portions C1a and C2a adjacent to each other in the transverse direction Z2 may be connected to each other. Here, the expression "the first transverse connection portions C1a and the second transverse connection portions C2a of adjacent battery packs 1 are formed in complementary shapes" may indicate that first transverse connection portions C1a and second transverse connection portions C2a arranged at the same position in the row direction Z1 are formed in complementary shapes.

In the expanded module 100 including the battery packs 1, battery packs 1 adjacent in the row direction Z1 may be connected in parallel to each other, and in such an embodiment, busbars B adjacent to each other in the row direction Z1 may be connected to each other through the front connection portions BF and the rear connection portions BR of the busbars B to form a row of battery cells 10 and busbars B that are expanded in the first direction Z1. Furthermore, in the expanded module 100 including the battery packs 1, battery packs 1 adjacent to each other in the transverse direction Z2 may be connected in series to each other, and in such an embodiment, connection bars C adjacent to each other in the transverse direction Z2 may be connected to each other through the first and second transverse connection portions C1a and C2a of the connection bars C to increase the number of rows of battery cells 10 and the number of busbars B arranged in the transverse direction Z2.

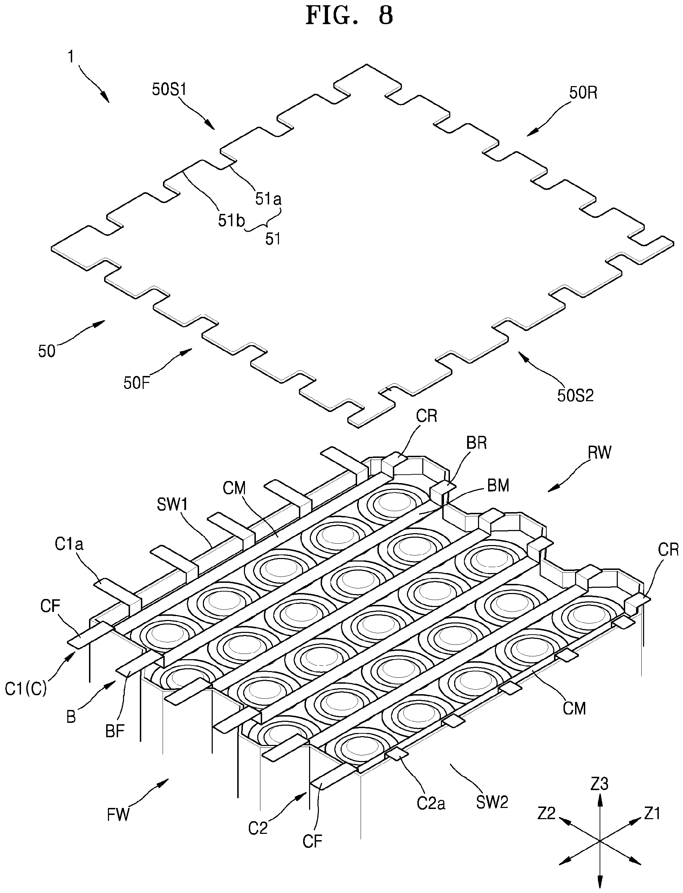

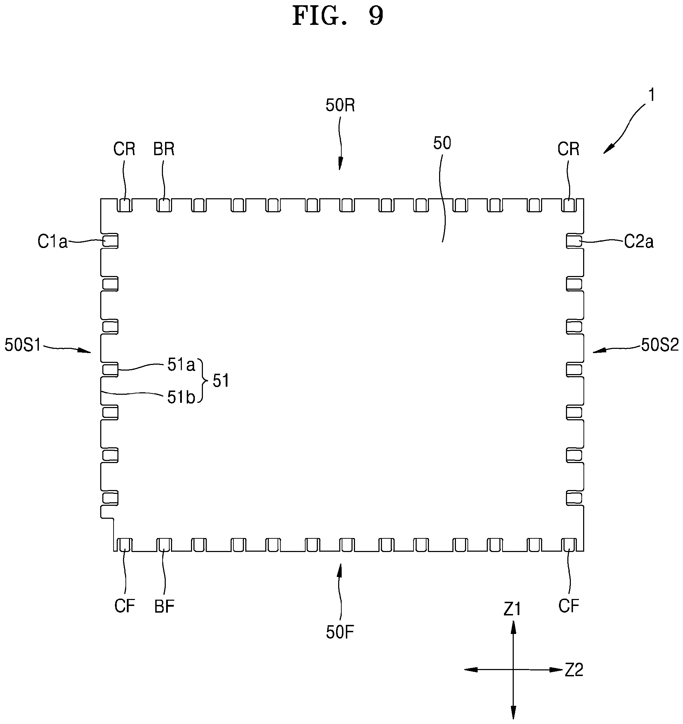

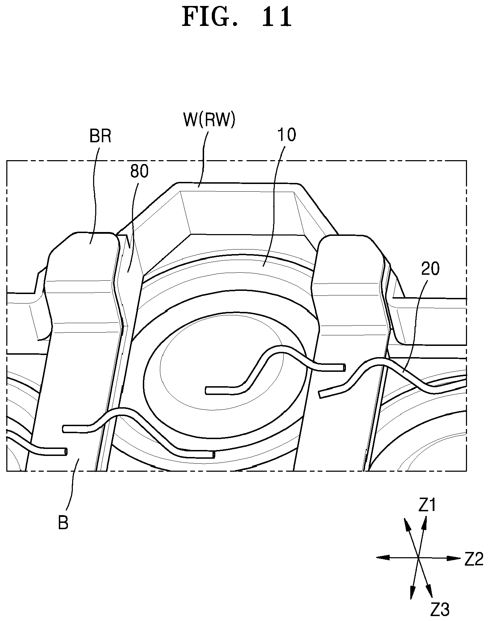

FIG. 8 is an exploded perspective view illustrating a battery pack 1 according to another embodiment. FIG. 9 is a plan view illustrating the battery pack 1 shown in FIG. 8. FIG. 10 is a view illustrating an expanded module 100 in which battery packs 1, such as the battery pack 1 shown in FIG. 9, are arranged in the row direction Z1 and the transverse direction Z2. FIG. 11 is a perspective view illustrating a portion of the battery pack 1 according to another embodiment.

Referring to FIGS. 8 to 11, the battery pack 1 may further include a cover 50 coupled to the case W. For example, the cover 50 may be coupled to the walls of the case W in which the battery cells 10 are accommodated. The cover 50 may protect inner components, such as the battery cells 10, the busbars B, and the connection bars C that are accommodated in the case W. The cover 50 may cover and protect the body portions BM of the busbars B and the body portions CM of the connection bars C that are accommodated in the case W and may also protect the front connection portions BF and the rear connection portions BR of the busbars B protruding to the outside of the case W in the row direction Z1 and the first transverse connection portions C1a and the second transverse connection portions C2a of the connection bars C protruding to the outside of the case W in the transverse direction Z2.

In an embodiment, concave-convex patterns 51 may be formed along a front edge portion 50F, a rear edge portion 50R, a first lateral edge portion 50S1, and a second lateral edge portion 50S2 of the cover 50 to respectively receive the front connection portions BF and CF, the rear connection portions BR and CR, the first transverse connection portions C1a, and the second transverse connection portions C2a. For example, the cover 50 may include the front edge portion 50F and the rear edge portion 50R, which face each other in the row direction Z1, and the first and second lateral edge portions 50S1 and 50S2, which face each other in the transverse direction Z2 crossing the row direction Z1. The concave-convex patterns 51 are formed along the periphery of the cover 50, that is, along the front edge portion 50F, the rear edge portion 50R, and the first and second lateral edge portions 50S1 and 50S2 of the cover 50 such that the cover 50 may protect the front connection portions BF and CF, the rear connection portions BR and BF, and the first and second transverse connection portions C1a and C2a, which are exposed to the outside of the case W, and may protect connection between adjacent battery packs 1 in an expanded module 100 including a plurality of battery packs 1.

In an embodiment, the concave-convex pattern 51 formed on the front edge portion 50F of the cover 50 may include concave portions 51a formed on the front edge portion 50F at positions at where the front connection portions BF and CF, that is, the front connection portions BF and CF of the busbars B and the connection bars C, are formed, and convex portions 51b formed on the front edge portion 50F at positions at where the front connection portions BF and CF are not formed. The convex portions 51b may be formed between the front connection portions BF and CF along the front edge portion 50F, and the front connection portions BF and CF and the convex portion 51b of the cover 50 may be fitted to each other. In an embodiment, the convex portions 51b of the cover 50 may be fitted between the front connection portions BF and CF and may protect the front connection portions BF and CF. For example, the convex portions 51b of the cover 50 may protect the front connection portions BF and CF from external impact. In an embodiment, the front connection portions BF and CF may be stepped upwardly from the body portions BM of the busbars B and the body portions CM of the connection bars C, which are accommodated in the case W, and may be arranged on the front wall FW of the case W. in such an embodiment, the front connection portions BF and CF may be fitted between the convex portions 51b formed on the front edge portion 50F of the cover 50 coupled to the front wall FW of the case W. Here, the expression "the front connection portions BF and CF and the convex portions 51b of the cover 50 are fitted to each other" may not always indicate that the front connection portions BF and CF and the convex portions 51b of the cover 50 are fitted to each other in the same plane. For example, even when the front connection portions BF and CF and the convex portion 51b of the cover 50 are arranged on different planes in the height direction Z3, it is sufficient that the convex portions 51b of the cover 50 provided on both sides of each of the front connection portions BF and CF are capable of blocking external impact acting on the front connection portions BF and CF. It is not necessary that the front connection portions BF and CF and the convex portions 51b of the cover 50 are fitted to each other on the same plane in the height direction Z3.

Similar to the concave-convex pattern 51 formed on the front edge portion 50F of the cover 50, the concave-convex pattern 51 formed on the rear edge portion 50R of the cover 50 may include concave portions 51a formed on the rear edge portion 50R at positions at where the rear connection portions BR and CR, that is, the rear connection portions BR and CR of the busbars B and the connection bars C, are formed, and convex portions 51b formed on the rear edge portion 50R at positions at where the rear connection portions BR and CR are not formed. The convex portions 51b may be formed between the rear connection portions BR and CR along the rear edge portion 50R, and the rear connection portions BR and CR and the convex portion 51b of the cover 50 may be fitted to each other. In an embodiment, the convex portions 51b of the cover 50 may be fitted between the rear connection portions BR and CR and may protect the rear connection portions BR and CR from external impact.

Similar to the concave-convex patterns 51 formed on the front edge portion 50F and the rear edge portion 50R of the cover 50, the concave-convex patterns 51 may be formed on the first and second lateral edge portions 50S1 and 50S2 for protecting the first and second transverse connection portions C1a and C2a, respectively. The concave-convex patterns 51 may include concave portions 51a formed on the first and second lateral edge portions 50S1 and 50S2 at positions at where the first and second transverse connection portions C1a and C2a are formed, and convex portions 51b formed on the first and second lateral edge portions 50S1 and 50S2 at positions at where the first and second transverse connection portions C1a and C2a are not formed. The convex portions 51b may be formed between the first and second transverse connection portions C1a and C2a along the first and second lateral edge portions 50S1 and 50S2, and the first and second transverse connection portions C1a and C2a and the convex portions 51b of the cover 50 may be fitted to each other.

As described above, the concave-convex patterns 51, which are formed on the front edge portion 50F, the rear edge portion 50R, and the first and second lateral edge portions 50S1 and 50S2 of the cover 50, may protect the front connection portions BF, the rear connection portions BR, and the first and second transverse connection portions C1a and C2a, which protrude outside the walls of the case W. In the expanded module 100 including the battery packs 1, the concave-convex pattern 51 may protect the front connection portions BF, the rear connection portions BR, and the first and second transverse connection portions C1a and C2a, and thus, electrical connection between the battery packs 1 adjacent to each other in the row direction Z1 and the transverse direction Z2 may be protected by the concave-convex patterns 51.

Referring to FIG. 11, in the expanded module 100 include the battery packs 1 in the row direction Z1 and/or the transverse direction Z2, each case W may include a support block 80 configured to support the front connection portions BF and the rear connection portions BR of the busbars B, the front connection portions CF and the rear connection portions CR of the connection bars C, and the first and second transverse connection portions C1a and C2a of the connection bars C, which form connection between adjacent battery packs 1. For reference, in FIG. 11, the support block 80 is illustrated as supporting the rear connection portions BR of the busbars B, but the technical scope of the present disclosure is not limited thereto. In various embodiments, the support block 80 may support at least one of the front connection portions BF and the rear connection portions BR of the busbars B, the front connection portions CF and the rear connection portions CR of the connection bars C, and the first and second transverse connection portions C1a and C2a of the connection bars C, which form connection between adjacent battery packs 1. In an embodiment, the connection portions BF, BR, CF, CR, C1a, and C2a of one battery pack 1 may be placed on and welded to the connection portions BF, BR, CF, CR, C1a, and C2a of another battery pack 1 adjacent to the battery pack 1, and the support blocks 80 of the adjacent battery packs 1 may support and protect the connection portions BF, BR, CF, CR, C1a, and C2a or coupling regions including the connection portions BF, BR, CF, CR, C1a, and C2a and may provide stable support bases for coupling processes, such as a welding process.

As described above, according to the present disclosure, modules having various output power levels and capacities may be provided by connecting battery packs having the same structure as one unit. For example, battery packs having the same structure may be used to satisfy various power and capacity requirements by increasing or decreasing the number of battery packs included in a module, and thus, the battery packs may be used with high expandability and flexibility.

It should be understood that embodiments described herein should be considered in a descriptive sense and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims and their equivalents.

## Claims

**1.** A battery pack comprising:
a plurality of battery cells (10) arranged in a plurality of rows extending in a row direction, the battery cells (10) being arranged such that rows adjacent to each other in a transverse direction crossing the row direction are alternately shifted to forward and backward positions in the row direction;
a busbar (B) extending in the row direction, the busbar (B) comprising:
a busbar body portion (BM) extending in the row direction;
a busbar front connection portion (BF) at one end of the busbar (B); and
a busbar rear connection portion (BR) at another end of the busbar (B), the busbar front connection portion (BF) and the busbar rear connection portion (BR) protruding from the busbar body portion (BM) and having different lengths and levels from each other; and
a case (W) accommodating the battery cells, the case comprising a front wall (FW) and a rear wall (RW) having complementary shapes and facing each other in the row direction with the battery cells (10) therebetween.

**2.** The battery pack of claim 1, wherein the front wall comprises:
a first convex portion protruding forwardly in accordance with a row shifted to a forward position; and
a first concave portion concave toward a front side in accordance with a row shifted to a backward position.
and/or wherein the rear wall comprises:
a second convex portion protruding backwardly in accordance with the row shifted to the backward position; and
a second concave portion concave toward a rear side in accordance with the row shifted to the forward position.

**3.** The battery pack of claim 2, wherein the first convex portion of the front wall and the second concave portion of the rear wall are at the same row positions and have complementary shapes fittable to each other, and
wherein the first concave portion of the front wall and the second convex portion of the rear wall are at the same row positions and have complementary shapes fittable to each other.

**4.** The battery pack of any preceding claim 1, wherein the busbar is shifted to a forward position or a backward position in the row direction.
and/or wherein the battery pack further comprises a plurality of busbars arranged in the transverse direction, and
wherein the busbars are shifted together equally to forward positions or backward positions.
and/or wherein the busbars are shifted to the forward positions, and
wherein the busbar front connection portions of the busbars protrude a longer distance than the busbar rear connection portions of the busbars.

**5.** The battery pack of any preceding claim 1, wherein the busbar front connection portions and the busbar rear connection portions are stepped from the corresponding busbar body portion and have levels outside walls of the case in a height direction crossing the row direction and the transverse direction.
and/or wherein the busbar front connection portion extends toward an outside of the front wall at a level outside the front wall, and
wherein the busbar rear connection portion extends toward an outside of the rear wall at a level outside the rear wall.
and/or wherein the busbar front connection portion and the busbar rear connection portion are at different levels for overlapping each other.
and/or wherein the busbar body portion extends between the adjacent rows and electrically connects the battery cells in the adjacent rows to each other.

**6.** The battery pack of any preceding claim, wherein the busbar front connection portion is between a first convex portion and a first concave portion of the front wall that are formed corresponding to positions of the adjacent rows, and
wherein the busbar rear connection portion is between a second convex portion and a second concave portion of the rear wall that are formed corresponding to the positions of the adjacent rows.

**7.** The battery pack of claim 1, further comprising a connection bar connected to an outermost row in the transverse direction,
wherein the busbar is between the adjacent rows that are adjacent to each other in the transverse direction.
and/or wherein, when the busbar is shifted to the forward position, the connection bar is shifted to a forward position, or
wherein, when the busbar is shifted to the backward position, the connection bar is shifted to a backward position.

**8.** The battery pack of claim 13, wherein the connection bar (C) comprises:
a connection-bar body portion CM) extending in the row direction and connected to the battery cells in the outermost row;
a connection-bar front connection portion (CF) at one end of the connection bar;
a connection-bar rear connection portion (CR) at another end of the connection bar, the connection-bar front connection portion and the connection-bar rear connection portion protruding from the connection-bar body portion in the row direction; and
a transverse connection portion (C1a, C2a) protruding from the connection-bar body portion in the transverse direction toward an outside of the battery pack.

**9.** The battery pack of claim 8, wherein the connection-bar front connection portion and the connection-bar rear connection portion protrude different lengths from the connection-bar body portion in the row direction.
and/or wherein the connection-bar body portion is inside walls of the case, and
wherein the connection-bar front connection portion, the connection-bar rear connection portion, and the transverse connection portion are stepped from the connection-bar body portion and have levels outside the walls of the case in a height direction crossing the row direction and the transverse direction.

**10.** The battery pack of claim 8 or 9, wherein the transverse connection portion comprises a plurality of transverse connection portions protruding in the transverse direction from intermittent positions of the connection-bar body portion extending in the row direction.

**11.** The battery pack of any one of claims 7 to 10, further comprising first and second ones of the connection bars respectively connected to different outermost rows.

**12.** The battery pack of claim 11, wherein the transverse connection portion comprises:
a first transverse connection portion protruding from the first one of the connection bars toward the outside of the battery pack; and
a second transverse connection portion protruding from the second one of the connection bars toward the outside of the battery pack.
and/or wherein the first and second transverse connection portions protrude different lengths respectively from the connection-bar body portions of the first and second ones of the connection bars.
and/or wherein the first and second transverse connection portions are at different levels for overlapping each other.

**12.** The battery pack of any preceding claim, wherein the case further comprises first and second sidewalls facing each other in the transverse direction,
wherein the front wall and the rear wall face each other in the row direction, and
wherein the first and second sidewalls are flat.

**13.** The battery pack of any preceding claim, further comprising a cover on the case, the cover comprising:
a front edge portion and a rear edge portion facing each other in the row direction; and
first and second lateral edge portions facing each other in the transverse direction.
and/or wherein the front edge portion, the rear edge portion, and the first and second lateral edge portions comprise concave-convex patterns.

**14.** The battery pack of claim 13, wherein the concave-convex pattern of the front edge portion comprises concave portions through which the busbar front connection portion and a connection-bar front connection portion are exposed and a convex portion between the concave portions,
wherein the concave-convex pattern of the rear edge portion comprises concave portions through which the busbar rear connection portion and a connection-bar rear connection portion are exposed and a convex portion between the concave portions,
wherein the concave-convex pattern of the first lateral edge portion comprises concave portions through which first transverse connection portions are exposed and a convex portion between the concave portions, and
wherein the concave-convex pattern of the second lateral edge portion comprises concave portions through which second transverse connection portions are exposed and a convex portion between the concave portions.

**15.** The battery pack of claim 13 or 14, wherein the concave-convex pattern of the front edge portion is fitted to the busbar front connection portion and the connection-bar front connection portion,
wherein the concave-convex pattern of the rear edge portion is fitted to the busbar rear connection portion and the connection-bar rear connection portion,
wherein the concave-convex pattern of the first lateral edge portion is fitted to the first transverse connection portions, and
wherein the concave-convex pattern of the second lateral edge portion is fitted to the second transverse connection portions.
